# EUROPEAN PATENT APPLICATION

(11) **EP 4 163 775 A1**
(43) Date of publication of application: **12.04.2023**
(21) Application number: 21822097.8
(22) Date of filing: 04.06.2021
(51) Int. Cl.: G06F 3/0484

(54) **METHOD AND APPARATUS FOR CONTROLLING APPLICATION, AND ELECTRONIC DEVICE**

(30) Priority: 09.06.2020 CN 202010519374
(71) Applicant: Vivo Mobile Communication Co., Ltd., Dongguan, Guangdong 523863 (CN)
(72) Inventor: CHEN, Jiaxing, Dongguan, Guangdong 523863 (CN)
(74) Representative: Raffay & Fleck
(86) International application number: PCT/CN2021/098360
(87) International publication number: WO 2021/249303

(57) **Abstract**

A method and apparatus for controlling an application, and an electronic device. The solution comprises: under the condition of displaying a first interface of a first application, receiving a first input; in response to the first input, displaying an adjustment control, displaying the first interface in a first display region, and displaying, in a second display region, a second interface of a second application, the second application being an application having an association with the first application; receiving a second input for the adjustment control; and in response to the second input, adjusting the association level between the first application and the second application, wherein the association level indicates any one of: the number of associated operations and the importance of an associated operation; the associated operation is an associated operation between the first application and the second application.

## Description

### CROSS-REFERENCE TO RELATED APPLICATIONS

This application claims priority to Chinese Patent Application No. 202010519374.X, filed in China on June 09, 2020, which is incorporated herein by reference in its entirety.

### TECHNICAL FIELD

Embodiments of the present invention relate to the technical field of communications, and in particular, to an application control method and apparatus, and an electronic device.

### BACKGROUND

With the development of the communication technology, the functions of an electronic device are richer. For example, the electronic device can simultaneously display interfaces of two applications on a screen of the electronic device so as to display different information to a user through the two interfaces.

At present, in a case that the electronic device simultaneously displays an interface of application 1 and an interface of application 2 on a screen of the electronic device, the user can perform an input on the interface of application 1 so as to trigger the electronic device to control application 1 to execute an operation corresponding to the input while staying the interface of application 2 unchanged. Accordingly, the user can perform an input on the interface of application 2 so as to trigger the electronic device to control application 2 to execute an operation corresponding to the input while staying the interface of application 1 unchanged. It can be seen that the electronic device simultaneously displays the interface of application 1 and the interface of application 2 by independently running application 1 and application 2. In this way, the electronic device simultaneously displays the interfaces of these applications by independently running multiple applications. As a result, it is possible that the manner in which the electronic device simultaneously displays interfaces of multiple applications is single, and is poor in flexibility.

### SUMMARY

Embodiments of the present invention provide an application control method and apparatus, and an electronic device, for use in solving the problems that the manner in which an electronic device simultaneously displays interfaces of multiple applications is single, and is poor in flexibility.

In order to solve the technical problems, this application is implemented as follows:

According to a first aspect, embodiments of the present invention provide an application control method and apparatus. The method includes: receiving a first input in a case that a first interface is displayed, where the first interface is an interface of a first application; displaying an adjustment control, displaying the first interface in a first display area, and displaying a second interface in a second display area in response to the first input, where the second interface is an interface of a second application, and the second application is an application having an association relation with the first application; receiving a second input for the adjustment control; and adjusting an association level between the first application and the second application in response to the second input, where the association level is used for indicating any one of the following: the number of association operations between the first application and the second application, and the importance of the association operations between the first application and the second application.

According to a second aspect, the embodiments of the present invention provide an application control method and apparatus. The apparatus includes: a receiving module, a display module, and a control module. The receiving module is configured to receive a first input in a case that the display module displays a first interface, where the first interface is an interface of a first application. The display module is configured to display an adjustment control, display the first interface in a first display area, and display a second interface in a second display area in response to the first input received by the receiving module, where the second interface is an interface of a second application, and the second application is an application having an association relation with the first application. The receiving module is further configured to receive a second input for the adjustment control displayed by the display module. The control module is configured to adjust an association level between the first application and the second application in response to the second input received by the receiving module, where the association level is used for indicating at least one of the following: the number of association operations between the first application and the second application, and the importance of the association operations between the first application and the second application.

According to a third aspect, the embodiments of the present invention provide an electronic device, including a processor, a memory, and a computer program stored on the memory and runnable on the processor, where the computer program, when executed by the processor, implements the steps of the application control method according to the first aspect.

According to a fourth aspect, the embodiments of the present invention provide a computer readable storage medium, having a computer program stored thereon, where the computer program, when executed by a processor, implements the steps of the application control method according to the first aspect.

In the embodiments of this application, in a case that a first interface is displayed, the electronic device can receive a first input, where the first interface is an interface of a first application; display an adjustment control, display the first interface in a first display area, and display a second interface in a second display area in response to the first input, where the second interface is an interface of a second application, and the second application is an application having an association relation with the first application; receive a second input for the adjustment control; and adjust an association level between the first application and the second application in response to the second input, where the association level is used for indicating any one of the following: the number of association operations between the first application and the second application, and the importance of the association operations between the first application and the second application. Through this solution, when the electronic device simultaneously displays the first interface and the second interface, that is, according to the association relation between the second application corresponding to the second interface and the first application corresponding to the first interface, the electronic device can display the adjustment control used for adjusting the association level between the first application and the second application. Therefore, a user can trigger the electronic device to flexibly adjust the association level between the first application and the second application according to actual use requirements, so that the electronic device can display the interface of the first application and the interface of the second application at different association levels, and thus the flexibility that the electronic device simultaneously displays interfaces of multiple applications can be improved.

Furthermore, the association level between the first application and the second application can indicate the degree of association between the first application and the second application, and the degree of association determines whether operations can be associated between the two applications, and the degree to which operations are associated. Therefore, based on the application control method provided by the embodiments of the present invention, the user can trigger the electronic device to adjust the association level between the first application and the second application to an association level that satisfies the requirements for the association operations between the first application and the second application, thereby improving the user experience.

### BRIEF DESCRIPTION OF THE DRAWINGS

FIG. 1 is an architecture diagram of a possible Android operating system provided by embodiments of the present invention.
FIG. 2 is a first schematic diagram of an application control method provided by embodiments of the present invention.
FIG. 3 is a first schematic diagram of an interface of an application in an application control method provided by embodiments of the present invention.
FIG. 4 is a second schematic diagram of an interface of an application in an application control method provided by embodiments of the present invention.
FIG. 5 is a second schematic diagram of an application control method provided by embodiments of the present invention.
FIG. 6 is a third schematic diagram of an interface of an application in an application control method provided by embodiments of the present invention.
FIG. 7 is a fourth schematic diagram of an interface of an application in an application control method provided by embodiments of the present invention.
FIG. 8 is a fifth schematic diagram of an interface of an application in an application control method provided by embodiments of the present invention.
FIG. 9 is a sixth schematic diagram of an interface of an application in an application control method provided by embodiments of the present invention.
FIG. 10 is a schematic structural diagram of an application control apparatus provided by embodiments of the present invention.
FIG. 11 is a schematic diagram of hardware of an electronic device provided by embodiments of the present invention.

### DETAILED DESCRIPTION

The following describes the technical solutions in the embodiments of this application clearly and completely in conjunction with the accompanying drawings in the embodiments of this application. Apparently, the described embodiments are some of the embodiments of the present invention, not all of the embodiments. On the basis of the embodiments in the present invention, all other embodiments obtained by a person of ordinary skill in the art without inventive efforts shall fall within the scope of protection of the present invention.

The term "and/or" herein describes an association relation between associated objects, indicating that three relations may exist, for example, A and/or B may indicate three conditions, i.e., A exists separately, A and B exist at the same time, and B exists separately. The symbol "/" herein indicates a relation in which the associated objects are or, for example, A/B indicates A or B.

The terms "first", "second", and the like herein are used for distinguishing different objects, rather than describing specific sequences of the objects. For example, a first input and a second input are used for distinguishing different inputs, rather than describing specific sequences of the inputs.

In the embodiments of this application, words such as "exemplary" or "for example" are used to express an example, illustration, or description. Any embodiments or design schemes described in the embodiments of this application as "exemplary" or "such as" should not be illustrated as preferred or advantageous over other embodiments or design schemes. Exactly, the use of words such as "exemplary" or "such as" is intended to present the related concepts in a specific manner.

In the descriptions of the embodiments of the present invention, unless otherwise stated, "multiple" may refer to two or more. For example, multiple elements refer to two or more elements.

Embodiments of the present invention provide an application control method and apparatus, and an electronic device. In a case that a first interface is displayed, the electronic device can receive a first input, the first interface being an interface of a first application; display an adjustment control, display the first interface in a first display area, and display a second interface in a second display area in response to the first input, the second interface being an interface of a second application, and the second application being an application having an association relation with the first application; receive a second input for the adjustment control; and adjust an association level between the first application and the second application in response to the second input, the association level being used for indicating at least one of the following: the number of association operations between the first application and the second application, and the importance of the association operations between the first application and the second application. Through this solution, when the electronic device simultaneously displays the first interface and the second interface, that is, according to the association relation between the second application corresponding to the second interface and the first application corresponding to the first interface, the electronic device can display the adjustment control used for adjusting the association level between the first application and the second application. Therefore, a user can trigger the electronic device to flexibly adjust the association level between the first application and the second application according to actual use requirements, so that the electronic device can display the interface of the first application and the interface of the second application at different association levels, and thus the flexibility that the electronic device simultaneously displays interfaces of multiple applications can be improved. Furthermore, the association level between the first application and the second application can indicate the degree of association between the first application and the second application, and the degree of association determines whether operations can be associated between the two applications, and the degree to which operations are associated. Therefore, based on the application control method provided by the embodiments of the present invention, the user can trigger the electronic device to adjust the association level between the first application and the second application to an association level that satisfies the requirements for the association operations between the first application and the second application, thereby improving the user experience.

The electronic device in the embodiments of this application is an electronic device with an operating system. The operating system is an Android operating system or an iOS operating system, or other possible operating systems, which are not specifically limited in the embodiments of the present invention.

Taking the Android operating system as an example below, the software environment applied to the application control method provided by the embodiments of the present invention is introduced.

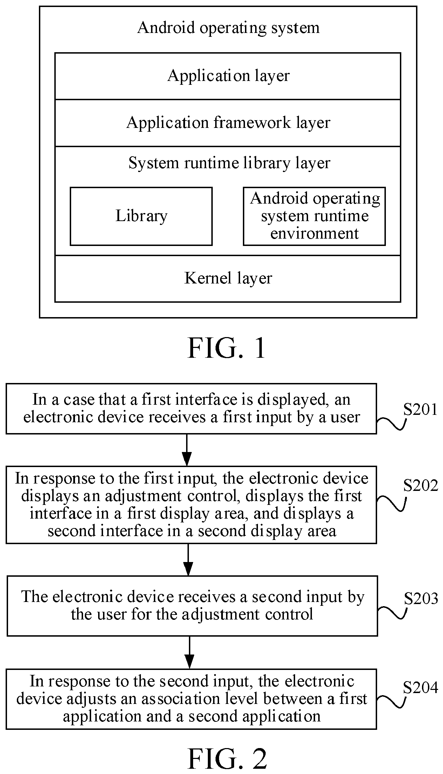

FIG. 1 is an architecture diagram of a possible Android operating system provided by embodiments of the present invention. In FIG. 1, the architecture of the Android operating system includes four layers: an application layer, an application framework layer, a system runtime library layer, and a kernel layer (which is specifically a Linux kernel layer). The application layer includes applications (including a system application and a third-party application) in the Android operating system. For example, the application layer may include a first application and a second application in the embodiments of this application.

The application framework layer is a framework of the applications. A developer can develop some applications based on the application framework layer in accordance with the development principle of the framework of the applications. For example, the developer may develop the first application and the second application in the embodiments of this application based on the application framework layer.

The system runtime library layer includes a library (which is also referred to as a system library) and Android operating system runtime environment. The library is mainly used for providing various resources required for the Android operating system. The Android operating system runtime environment is used for providing the software environment for the Android operating system.

The kernel layer is an operating system layer of the Android operating system, and is the bottommost layer of software of the Android operating system. The kernel layer provides a core system service and a driver related to hardware for the Android operating system based on a Linux kernel.

Taking the Android operating system as an example, in the embodiments of this application, the developer can develop, based on the system architecture of the Android operating system shown in FIG. 1, a software program for implementing the application control method provided by the embodiments of the present invention, so that the application control method is implemented based on the Android operating system shown in FIG. 1. That is, a processor or the electronic device implements the application control method provided by the embodiments of the present invention by running the software program in the Android operating system.

The electronic device in the embodiments of this application is a mobile terminal or a non-mobile terminal. Exemplarily, the mobile terminal is a mobile phone, a tablet computer, a laptop computer, a palm computer, an on-board terminal, a wearable device, an ultra-mobile personal computer (ultra-mobile personal computer, UMPC), a netbook, or a personal digital assistant (personal digital assistant, PDA), etc. The non-mobile terminal is a personal computer (personal computer, PC), a television (television, TV), a teller machine, or a self-service machine, etc., which are not specifically limited in the embodiments of the present invention.

An execution subject of the application control method provided by the embodiments of the present invention is the electronic device, or a functional module and/or a functional entity in the electronic device which can implement the application control method, is specifically determined according to actual use requirements, and is not limited in the embodiments of the present invention. Taking the electronic device as an example below, the application control method provided by the embodiments of the present invention is exemplarily described.

The application control method provided by the embodiments of the present invention can be applied to a scene where the electronic device is required by the user to simultaneously display interfaces of multiple applications.

In the embodiments of this application, in a case that the electronic device displays an interface of one application (hereinafter referred to as application 2), when the user performs an input (e.g. a first input in the embodiments of this application) on another application (hereinafter referred to as application 3), the electronic device first determines whether application 4 has an association relation with application 3 in response to the input. If application 4 has an association relation with application 3, the electronic device displays an interface of application 3 in one display area, displays an interface of application 4 in another display area, and displays an adjustment control, so that the user triggers the electronic device to adjust an association level between application 3 and application 4 by performing another input on the adjustment control. If application 4 does not have an association relation with application 3, the electronic device still displays the interfaces of application 3 and application 4, respectively in different display areas of a display screen of the electronic device, but does not display the adjustment control. In this case, the electronic device independently runs application 3 and application 4, respectively. In this way, according to the application control method provided by the embodiments of the present invention, not only interfaces of multiple applications are simultaneously displayed, but also an adjustment control used for adjusting an association level between these applications is displayed when these simultaneously displayed applications have an association relation, so that the user can trigger the electronic device to adjust the association level between these applications according to actual use requirements, thereby improving the flexibility of simultaneously displaying interfaces of multiple applications.

Furthermore, the association level between application 3 and application 4 can indicate the degree of associated display between application 3 and application 4, and the degree of association determines whether displays can be associated between the two applications, and the degree to which displays are associated. Therefore, based on the application control method provided by the embodiments of the present invention, the user can trigger the electronic device to adjust the association level between multiple applications to an association level that satisfies the requirements for the associated display between these applications, thereby improving the user experience.

In the embodiments of this application, "XX" refers to application XX. For example, "shopping 1" refers to shopping application 1. An icon of "XX" refers to an icon of application XX, which have the same meaning and can be interchanged. For example, an icon of "shopping 1" refers to an icon of shopping application 1.

The application control method provided by the embodiments of the present invention will be exemplarily described below with reference to the accompanying drawings.

As shown in FIG. 2, the embodiments of the present invention provide an application control method. The method includes S201 to S204 below.

S201. In a case that a first interface is displayed, an electronic device receives a first input by a user.

The first interface is an interface of a first application. For example, the first interface is a main interface of the first application, or a functional interface of the first application, is specifically determined according to actual use requirements, and is not limited in the embodiments of the present invention.

Optionally, in the embodiments of this application, the first application is any application in the electronic device. For example, the first application is any one of possible applications such as "reading", "chat", "shopping 1", "game", "news", "map", "navigation", "setting", and "weather". This is specifically determined according to actual use requirements, and is not limited in the embodiments of the present invention.

Optionally, in the embodiments of this application, the first input is an input of triggering the electronic device to simultaneously display the first interface and a second interface.

Optionally, in the embodiments of this application, the first input is any possible form of input such as a click input, a long press input, a re-press input, a sliding input, and a drag input, is specifically determined according to actual use requirements, and is not limited in the embodiments of the present invention. The click input is an input of single clicking, double-clicking, or continuous clicking for a first preset number of times. The long press input is an input of contacting for a first preset time. The re-press input is also referred to as a pressure touch input, and refers to an input in which the user presses at a pressure value greater than or equal to a first pressure threshold. The sliding input is an input of dragging along a first preset direction. The drag input is an input of sliding along a second preset direction.

It should be noted that, the first preset number of times, the first preset time, the first preset direction, the first pressure threshold, and the second preset direction are specifically determined according to actual use requirements, and are not limited in the embodiments of the present invention.

S202. In response to the first input, the electronic device displays an adjustment control, displays the first interface in a first display area, and displays the second interface in a second display area.

The second interface is an interface of a second application, and the second application is an application in the electronic device having an association relation with the first application.

Optionally, in the embodiments of this application, the second application is an application different from the first application, or an application same as the first application, is specifically determined according to actual use requirements, and is not limited in the embodiments of the present invention.

Optionally, in the embodiments of this application, the number of second applications is not limited. That is, one or more second applications are included, which is specifically determined according to actual use requirements. In order to better describe the application control method provided by the embodiments of the present invention, unless otherwise stated particularly, one second application is exemplary in the embodiments below.

Optionally, in the embodiments of this application, the second interface is any interface of the second application. For example, the second interface is a main interface of the second application, or a functional interface of the second application, is specifically determined according to actual use requirements, and is not limited in the embodiments of the present invention.

Optionally, in the embodiments of this application, the adjustment control is used for triggering to adjust the association level between the first application and the second application. Please refer to the related descriptions in the following embodiments for the description of triggering to adjust the association level between the first application and the second application through the section control. In order to avoid repetition, details are not described here again.

In the embodiments of this application, a display position of the adjustment control is not limited. For example, the display position of the adjustment control is a position in the first display area, a position in the second display area, or another position other than those in the first display area and the second display area.

Optionally, in the embodiments of this application, in one possible implementation, the adjustment control may include a sliding area and a slider provided in the sliding area. In another possible implementation, the adjustment control may include multiple subcontrols (for example, the adjustment control includes M subcontrols, M being an integer greater than 1).

Optionally, in the embodiments of this application, in the one possible implementation, the sliding area is an annular area, an elongated area, or a rectangular area, is specifically determined according to actual use requirements, and is not limited in the embodiments of the present invention.

Optionally, in the embodiments of this application, in the another possible implementation, the electronic device may distinguish different subareas among the M subareas by different colors. Alternatively, the electronic device may distinguish different subareas by displaying numbers or letters in different subareas among the M subareas. Alternatively, the electronic device may distinguish different subareas among the M subareas in any other possible manner, which is specifically determined according to actual use requirements, and is not limited in the embodiments of the present invention.

In the embodiments of this application, upon receipt of the first input by the user, the electronic device first determines whether an associated display is supported between an application (e.g. the second application) corresponding to the first input and the first application. If the associated display is supported between the second application and the first application, it indicates that the first application has an association relation with the second application; therefore, the electronic device can display the adjustment control, display the first interface in the first display area, and display the interface (that is, the second interface) of the second application in the second display area. If an associated display is not supported between the second application and the first application, it indicates that the first application has no association relation with the second application; therefore, the electronic device can display the first interface in the first display area, and display the interface of the application in the second display area, but does not display the adjustment control.

Optionally, in the embodiments of this application, if an associated display is supported between one application and the other application, when simultaneously running the two applications, the electronic device can independently run the two applications, or associatively run the two applications. If an associated display is not supported between one application and the other application, when simultaneously running the two applications, the electronic device independently runs the two applications.

In the embodiments of this application, if one application and the other application have the same and/or similar operation, it can be determined that an associated display is supported between the two applications.

Example 1: if application A includes a search operation, and application B also includes a search operation, it indicates that application A and application B include the same operations. If application A includes a search operation, and application B includes a finding, filtering and/or commenting operation, it indicates that application A and application B include the similar operations. It can be seen that in this example, an associated display is supported between application A and application B.

Example 2: if application A includes an operation of controlling to switch to the previous page, and application B also includes an operation of controlling to switch to the previous page, it indicates that application A and application B include the same operations. If application B includes an operation of switching to the next K (K being a positive integer) page and/or an operation of switching to the previous G (G being an integer greater than 1) pages, it indicates that application A and application B include the similar operations. It can be seen that in this example, an associated display is supported between application A and application B.

In the embodiments of this application, the greater the number of same or similar operations between two applications which support associated display, the higher the degree of associated display between the two applications.

In the embodiments of this application, when the electronic device associatively runs two applications (e.g. application A and application B) which support associated display, at least one association operation is included between the two applications, each association operation includes two suboperations, one suboperation is an operation of application A, and the other subinput is an operation of application B.

It should be noted that in the embodiments of this application for each association operation in the at least one association operation, by performing an input of triggering one suboperation in one association operation, the user can trigger the electronic device to control the two applications to execute corresponding operations in the association operation, respectively. For example, it is assumed that the electronic device associatively runs application A and application B, and a search operation of application A is associated with a finding operation of application B, that is, the search operation of application A and the finding operation of application B constitute one association operation. Therefore, when the user performs an input of triggering the search operation on application A, the electronic device can control application A to execute the search operation, and control application B to execute the search operation.

Optionally, in the embodiments of this application, the first display area and the second display area are different display areas in a same display screen of the electronic device (case 1), or display areas in different display screens of the electronic device (case 2). Specifically, in case 1, the electronic device displays the first interface and the second interface in a split screen in one display screen. In this case, both the first application and the second application are applications that support split screen display. In case 2, the electronic device displays the first interface in one display screen, and displays the second interface in the other display screen. That is, in this case, the electronic device includes multiple display screens, and is, for example, a double-screen electronic device.

S203. The electronic device receives a second input by the user for the adjustment control.

Optionally, in the embodiments of this application, the second input is specifically any possible form of input such as a click input, a long press input, a sliding input, a drag input, and a re-press input, is specifically determined according to actual use requirements, and is not limited in the embodiments of the present invention.

Please refer to the related descriptions of the input form of the first input in the above embodiments for the description of the input form of the second input. In order to avoid repetition, details are not described here again.

S204. In response to the second input, the electronic device adjusts the association level between the first application and the second application.

Optionally, in the embodiments of this application, the association level is used for indicating any one of the following: the number of association operations between the first application and the second application (manner 1), and the importance of the association operations between the first application and the second application (manner 2).

In the embodiments of this application, the electronic device adjusts the association level between the first application and the second application, which can be understood as: the electronic device adjusts the association level between the first application and the second application within a range of the association level between the first application and the second application.

In the embodiments of this application, the electronic device can preset the association level between the first application and the second application. The association level may include M levels, M being an integer greater than 1. It can be understood that, in the embodiments of this application, the M levels relate to the range of the association level between the first application and the second application. That is, the electronic device can adjust the association level between the first application and the second application within the M levels. For example, it is assumed that the M levels include three levels: a first level, a second level, and a third level. That is, the range of the association level between the first application and the second application is: a first level, a second level, and a third level. Therefore, the electronic device can adjust the association level between the first application and the second application within a range composed of the first level, the second level, and the third level. Specifically, the electronic device can adjust the association level between the first application and the second application to the first level, the second level, or the third level.

Optionally, in the embodiments of this application, one of the levels among the M levels is represented by a value (e.g. 0, 1, 2, 3, ...), and different levels are represented by different values. For example, level 0 represents that a value of the level is 0, and level 1 represents that a value of the level is 1.

Optionally, in the embodiments of this application, in manner 1 and manner 2, if one level corresponds to at least one operation, one of the operations in the at least one operation is one association operation between the first application and the second application. In other words, one of the operations in the at least one operation includes two suboperations, one suboperation is an operation of the first application, and the other suboperation is an operation of the second application associated with the one suboperation. The one suboperation and the other suboperation are the same or similar operations.

Optionally, in the embodiments of this application, in manner 1 that the association level between the first application and the second application indicates the number of association operations between the first application and the second application, the larger a value of the association level, the greater the number of association operations indicated by the association level. For example, it is assumed that the association level between the first application and the second application includes three levels: level 0, level 1, and level 2, and the number of association operations indicated by level 0 is G, the number of association operations indicated by level 1 is H, and the number of association operations indicated by level 3 is U, G, H, and U being integers greater than or equal to 0, G is less than H, and H is less than U.

Manner 1 and manner 2 will be specifically described below.

### Manner 1

Optionally, in the embodiments of this application, in manner 1, if a value of one level among the M levels is 0, the number of association operations indicated by the level is 0. That is, when a value of one level between the first application and the second application is 0, there is no associated operation between the first application and the second application. It can be understood that in this case, the electronic device independently runs the first application and the second application. If a value of one level among the M levels is greater than 0, the number of association operations indicated by the level is greater than or equal to 1. In this case, the electronic device associatively runs the first application and the second application.

Optionally, in the embodiments of this application, if the M levels are sorted in ascending order of a level value, a first level does not correspond to any operation, and each of a second level to an M-th level corresponds to at least one operation.

Optionally, in the embodiments of this application, in manner 1, the greater the number of same or similar operations between two applications which support associated display, the larger the range of the association level between the two applications. For example, it is assumed that the number of same and similar operations between application 5 and application 6 is 1, the number of same or similar operations between application 7 and application 8 is 3; moreover, it is assumed that level 0 does not correspond to any association operation, level 1 corresponds to one association operation, and level 2 corresponds to five association operations. Therefore, it can be seen that there are two levels between application 5 and application 6, that is, level 0 and level 2; and there are three levels between application 7 and application 8, that is, level 0, level 1, and level 2. That is, it is possible to divide the range of the association level between two applications into levels based on the number of association operations between the two applications so as to meet actual use requirements of the user. Different association levels are provided for different applications.

Optionally, in the embodiments of this application, in manner 1, the electronic device may correspond the P association operations to the M levels according to the importance, the use frequency, or the operation convenience, etc. of the association operations between the first application and the second application. Specifically, the higher the importance of one association operation, the greater the number of levels among the M levels corresponding to the operation; and the lower the importance of one operation pair, the lower the number of levels among the M levels corresponding to the operation. Alternatively, the higher the use frequency of one operation pair, the greater the number of levels among the M levels corresponding to the operation; and the lower use frequency of one operation pair, the lower the number of levels among the M levels corresponding to the operation. Alternatively, the higher the operation convenience of one operation pair, the greater the number of levels among the M levels corresponding to the operation; and the lower the operation convenience of one operation pair, the lower the number of levels among the M levels corresponding to the operation.

In order to more clearly describe the application control method provided by the embodiments of the present invention, the association level between the first application and the second application, and a correspondence between operations corresponding to levels will be exemplarily described below with reference to specific examples. Exemplarily, it is assumed that the association level includes four (that is, M=4) levels, which are sequentially in ascending order of the level value: level 0, level 1, level 2, and level 3, three association operations are included between the first application and the second application: (operation a1, operation b1), (operation a2, operation b2), and (operation a3, operation b3), ai (i=1, 2, 3) is an operation of the first application, and bj (j=1, 2, 3) is an operation of the second application. Therefore, the association level, and the correspondence between operations corresponding to the levels in the association level are as shown in Table 1 below.

**Table 1**

| Association level (including M levels) | Operations corresponding to levels | Association operation |
|---|---|---|
| Level 0 | | |
| Level 1 | Operation c1 | (Operation a1, operation b1) |
| Level 2 | Operation c1 and operation c2 | (Operation a1, operation b1), (operation a2, operation b2) |
| Level 3 | Operation c1, operation c2, and operation c3 | (Operation a1, operation b1), (operation a2, operation b2), and (operation a3, operation b3) |

As shown in Table 1 above, firstly, level 0 does not correspond to any operation. Level 1 corresponds to operation c1, and operation c1 includes operation a1 and operation b1. Level 2 corresponds to operation c1 and operation c2, operation c1 including operation a1 and operation b1, and operation c2 including operation a2 and operation b2. Level 3 corresponds to operation c1, operation c2, and operation c3, operation c1 including operation a1 and operation b 1, operation c2 including operation a2 and operation b2, and operation 3 including operation a3 and operation b3.

Furthermore, it is assumed that the electronic device corresponds three association operations to M levels according to the importance of the association operations, it can be seen that operation c1 has the highest importance among the three operation pairs, the importance of operation c2 is less than that of operation c1, and the importance of operation c3 is less than that of operation c2.

Exemplarily, in the embodiments of this application, operation c1, that is, (operation a1, operation b1) in Table 1 is (a search function, a search function), operation c2, that is, (operation a2, operation b2) in Table 1 is (a commenting function, a commenting function), and operation c3, that is, (operation a3, operation b3) in Table 1 is (controlling to switch to the next page, switching to the next page).

### Manner 2

Optionally, in the embodiments of this application, in manner 2 that the association level is used for indicating the importance of the association operations between the first application and the second application, the larger a value of the association level, the higher the importance of the association operations indicated by the association level.

For example, it is assumed that the association level between the first application and the second application includes three levels: level 0, level 1, and level 2, where level 0 does not correspond to any operation, level 1 corresponds to operation c1 and operation c2, and level 2 corresponds to operation c3, operation c4, and operation c5, the importance of operation c1 and operation c2 is less than that of operation c3, operation c4, and operation c5.

Please refer to the related descriptions in manner 1 for other descriptions of manner 2. In order to avoid repetition, details are not described here again.

Optionally, in the embodiments of this application, in order to improve the user experience, the electronic device may display the adjustment control at a preset transparency before the user performs the second input, or after the electronic device responds to the second input.

Optionally, in the embodiments of this application, the electronic device directly adjusts the association level between the first application and the second application to a preset level when displaying the first interface and the second interface.

The application control method provided by the embodiments of the present invention will be exemplarily described below with reference to the one possible implementation and the other possible implementation.

One possible implementation is that the adjustment control specifically includes a sliding area and a slider provided in the sliding area.

Optionally, in the embodiments of this application, in the one possible implementation, S204 is specifically implemented through S204a below, and S203 is specifically replaced with S203a below.

S204a. In response to the second input, the electronic device controls the slider to slide in the sliding area, and adjusts the association level between the first application and the second application according to a position of the slider in the sliding area.

S203a. The electronic device receives a second input by the user for the slider.

Optionally, in the embodiments of this application, according to an input trajectory of the second input, the electronic device controls the slider to slide in the sliding area. The input trajectory of the second input may include any one of the following: an input direction of the second input, an input shape of the second input, an input starting position of the second input, and an input end position of the second input.

In the embodiments of this application, the electronic device can preset a correspondence between the association level and the sliding area, so that the electronic device can adjust the association level between the first application and the second application according to the position of the slider in the sliding area.

Optionally, in the embodiments of this application, the second input is specifically a user drag input for the slider.

Please refer to the related descriptions of the second input in S203 above for the description of the second input. In order to avoid repetition, details are not described here again.

Optionally, in the embodiments of this application, in the one possible implementation, it is assumed that the sliding area includes M subareas, the association level includes M levels, one subarea corresponds to one level, and M is an integer greater than 1.

Optionally, in the embodiments of this application, in the one possible implementation, S204a is specifically implemented through S204a1 below.

S204a1. In a case that the slider slides from a first subarea to a second subarea, the electronic device adjusts the association level between the first application and the second application from the first level to the second level.

The first subarea and the second subarea are different subareas among the M subareas. The first level and the second level are different levels among the M levels. The first level is a level corresponding to the first subarea, and the second level is a level corresponding to the second subarea.

Optionally, in the embodiments of this application, the levels corresponding to the M subareas in the sliding area are sequentially increased according to a second preset direction. The second preset direction is any possible direction such as an upward direction, a downward direction, a leftward direction, a rightward direction, a clockwise direction, or a counterclockwise direction. The upward, downward, leftward, rightward, clockwise, and counterclockwise directions are all exemplary relative to the display screen that displays the sliding area.

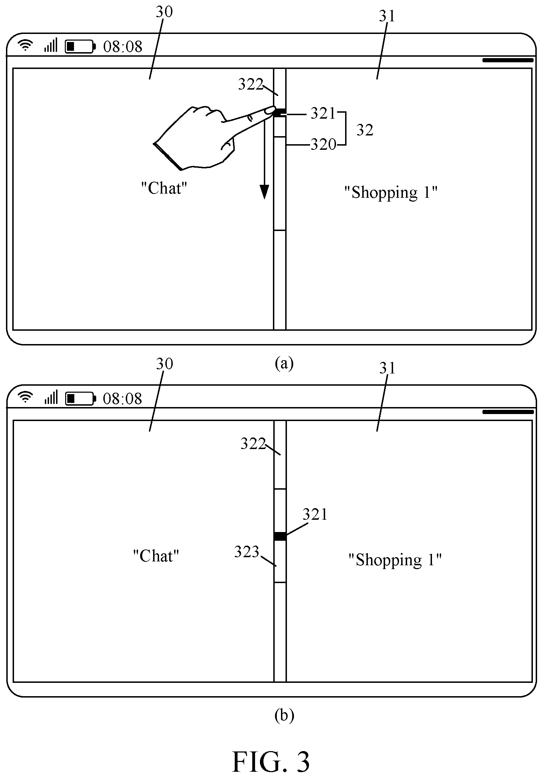

S203a and S204a1 will be exemplarily described below with reference to FIG. 3.

Exemplarily, it is assumed that the sliding area includes three (that is, M=3) subareas: a first subarea, a second subarea, and a third subarea, the association level specifically includes three levels: level 1, level 2, and level 3, and the first subarea corresponds to level 1, the second subarea corresponds to level 2, and the third subarea corresponds to level 3, as shown in (a) in FIG. 3, the electronic device can display an adjustment control 32, display an interface 30 of "chat" in a first display area, and display an interface 31 of "shopping 1" in a second display area. The adjustment control 32 includes a sliding area 320 and a slider 321 provided in the sliding area 320. The slider 321 is located in a first subarea 322 of the sliding area 320. In this case, the user can drag the slider 321 (for example, drags the slider 321 in the direction of the arrow shown in (a) in FIG. 3). That is, in a case that the electronic device receives the second input by the user for the slider, and then, as shown in (b) in FIG. 3, the electronic device controls the slider 321 to slide from the first subarea 322 to a second subarea 323 in response to the second input, and adjusts the association level between the first application and the second application from level 1 to level 2.

It can be understood that if the user needs to decrease an association level between "chat 1" and "shopping 1", the user only needs to slide the slider upwards, so that the degree of association between "chat 1" and "shopping 1" becomes lower again. When the slider slides to the uppermost end (e.g. the first subarea), the association level between "chat 1" and "shopping 1" is the lowest. At this time, no operation is associated between "chat 1" and "shopping 1". In this case, "chat 1" and "shopping 1" are two independent applications that maintain a current page, that is, the two applications return to a mode similar to the traditional split screen. In this way, the user can trigger the electronic device to increase the degree between the two applications by sliding the slider downwards to realize the association operation or the associated display, so that more information can be displayed when the associated display is performed. Moreover, the two applications can be triggered by sliding upwards to save the current page and disassociate the display, allowing uninterrupted independent operations.

In the embodiments of this application, the subareas of the sliding area have a one-to-one correspondence to the levels in the association level; therefore, the accuracy of adjusting, by the electronic device, the association level between the first application and the second application can be improved.

In the embodiments of this application, the electronic device can adjust the association level between the first application and the second application according to the position of the slider in the sliding area. Therefore, on the one hand, the user can intuitively view the adjustment process of the association level between the first application and the second application by the electronic device, so as to improve the user experience. On the other hand, the user can trigger, according to actual use requirements, the electronic device to move the slider into the sliding area, corresponding to a position that meets the actual use requirements, so as to improve the accuracy of adjusting the association level by the electronic device.

In another possible implementation, the adjustment control specifically includes M subcontrols, M being an integer greater than 1.

Optionally, in the embodiments of this application, in the another possible implementation, it is assumed that the adjustment control includes M subcontrols, the association level includes M levels, one subcontrol corresponds to one level, and M is an integer greater than 1. Therefore, S204 is specifically implemented through S204b below. S203 is specifically replaced with S203b below.

S204b. In response to the second input, the electronic device adjusts the association level between the first application and the second application to a level corresponding to a target subcontrol.

S203b. The electronic device receives a second input by the user for the target subcontrol among the M subcontrols.

Optionally, in the embodiments of this application, the target subcontrol is any subcontrol among the M subcontrols.

Optionally, in the embodiments of this application, upon reception of the second input by the user for the target subcontrol, the electronic device first compares the level corresponding to the target subcontrol with an original level. If the level corresponding to the target subcontrol is different from the original level, the electronic device adjusts the association level between the first application and the second application to the level corresponding to the target subcontrol. If the level corresponding to the target subcontrol is different from the original level, the electronic device stays the original level unchanged and ends the adjustment action. The original level is an association level between the first application and the second application before the user performs the second input.

Optionally, in the embodiments of this application, the second input is specifically any possible user input for the target subcontrol such as a click input, a long press input, and a re-press input. Please refer to the related descriptions of the second input in S203 above for the description of the input form of the second input. In order to avoid repetition, details are not described here again.

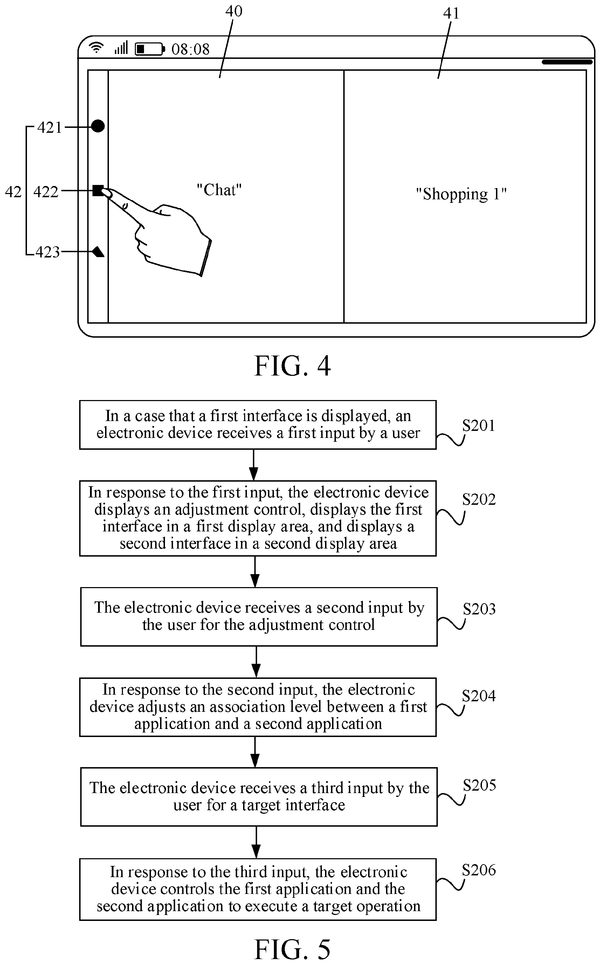

S203b and S204b will be exemplarily described below with reference to FIG. 4.

Exemplarily, as shown in FIG. 4, it is assumed that the electronic device displays an adjustment control 42, displays an interface 40 of "chat" in a first display area, and displays an interface 41 of "shopping 1" in a second display area, the adjustment control 42 includes 3 (that is, M=3) subcontrols: a subcontrol 421, a subcontrol 422, and a subcontrol 423, and an association level between "chat" and "shopping 1" includes three levels: level 1, level 2, and level 3; moreover, it is assumed that the subcontrol 421 corresponds to level 1, the subcontrol 422 corresponds to level 2, and the subcontrol 423 corresponds to level 3, and before the user performs a second input, the association level between "chat" and "shopping 1" is level 3, as shown in FIG. 4, the user can click on the subcontrol 422 (that is, a target subcontrol). That is, the electronic device receives the second input by the user for the target subcontrol among the M subcontrols, and then the electronic device adjusts the association level between "chat" and "shopping 1" from level 3 to level 2 in response to the second input. That is, the electronic device adjusts the association level between the first application and the second application to a level corresponding to the target subcontrol.

In the embodiments of this application, each subcontrol in the adjustment control can correspond to one of the association levels. Therefore, the user can directly perform an input on the corresponding subcontrol so as to trigger the electronic device to adjust the association level to a level that satisfies the actual use requirements of the user, and the user does not need to trigger the electronic device to repeatedly adjust the association level, thereby simplifying the process of adjusting the association level and increasing the speed of adjusting the association level. In this way, the user experience can be improved.

According to the application control method provided by the embodiments of the present invention, when the electronic device simultaneously displays the first interface and the second interface, that is, according to the association relation between the second application corresponding to the second interface and the first application corresponding to the first interface, the electronic device can display the adjustment control used for adjusting the association level between the first application and the second application. Therefore, the user can trigger the electronic device to flexibly adjust the association level between the first application and the second application according to actual use requirements, so that the electronic device can display the interface of the first application and the interface of the second application at different association levels, and thus the flexibility that the electronic device simultaneously displays interfaces of multiple applications can be improved.

Furthermore, the association level between the first application and the second application can indicate the degree of association between the first application and the second application, and the degree of association determines whether operations can be associated between the two applications, and the degree to which operations are associated. Therefore, based on the application control method provided by the embodiments of the present invention, the user can trigger the electronic device to adjust the association level between the first application and the second application to an association level that satisfies the requirements for the association operations between the first application and the second application, thereby improving the user experience.

Optionally, in the embodiments of this application, after the electronic device executes S202, that is, after the electronic device displays an adjustment control, displays the first interface in a first display area, and displays the second interface in a second display area, if a current association level (e.g. a target level below) between the first application and the second application corresponds to at least one operation, the user can perform an input (e.g. a third input below) of triggering a certain operation (e.g. a target operation below) of the at least one operation on an interface of any one of the two applications (that is, the first application and the second application), so as to trigger the electronic device to control both the first application and the second application to execute the target operation.

Exemplarily, in the embodiments of this application, with reference to FIG. 2, as shown in FIG. 5, after S204, the application control method provided by the embodiments of the present invention further includes S205 and S206 below.

S205. The electronic device receives a third input by the user for the target interface.

The third input is an input of triggering the target operation of at least one operation corresponding to the target level. The target interface is an interface of the first application or an interface of the second application.

In the embodiments of this application, the target level is a level between the first application and the second application before the electronic device receives the second input by the user, that is, a level between the first application and the second application before the electronic device adjusts the association level between the first application and the second application, that is, a level before adjustment. Alternatively, the target level is a level between the first application and the second application after the electronic device receives the second input by the user, that is, a level between the first application and the second application after the electronic device adjusts the association level between the first application and the second application, that is, a level after adjustment. This is specifically determined according to actual use requirements, and is not limited in the embodiments of the present invention.

It can be understood that, in the embodiments of this application, different operations of at least one operation corresponding to the target level are different association operations between the first application and the second application.

Optionally, in the embodiments of this application, when being an interface of the first application, the target interface is specifically an interface identical to the first interface, or an interface different from the first interface. Accordingly, when being an interface of the second application, the target interface is specifically an interface identical to the second interface, or an interface different from the second interface. This is specifically determined according to actual use requirements, and is not limited in the embodiments of the present invention.

Optionally, in the embodiments of this application, the third input is any possible form of input such as a click input, a long press input, a re-press input, a sliding input, a drag input in the target interface, and input of information (e.g. input of keywords) in the target interface, is specifically determined according to actual use requirements, and is not limited in the embodiments of the present invention.

It should be noted that, in the embodiments of this application, the description of the input form of the third input is merely an exemplary description, and the input form is specifically determined according to a correspondence between the target operation and the input.

S206. In response to the third input, the electronic device controls the first application and the second application to execute the target operation.

In the embodiments of this application, upon receipt of the third input by the user, the electronic device first determines an operation corresponding to the third input in response to the third input, and compares the operation with at least one operation corresponding to the target level. If the at least one operation includes the operation, the electronic device controls the first application and the second application to execute the operation, that is, execute S206. If the at least one operation does not include the operation, the electronic device controls an application corresponding to the target interface to execute the operation.

Optionally, in the embodiments of this application, it can be known from the related description of S204 that the target operation includes two same or similar suboperations. It is assumed that the two suboperations are a first suboperation and a second suboperation, the first suboperation is an operation of the first application, and the second suboperation is an operation of the second application, the electronic device controlling the first application and the second application to execute the target operation is specifically: controlling a first electronic device to control the first application to execute the first suboperation, and controlling the second application to execute the second suboperation.

It should be noted that, in the embodiments of this application, the third input specifically corresponds to an input of any one of the first suboperation and the second suboperation. The first suboperation and the second suboperation constitute one association operation, that is, the first suboperation is associated with the second suboperation. Therefore, the electronic device can find the second suboperation based on the first suboperation, or find the first suboperation based on the second suboperation.

Optionally, in the embodiments of this application, the method for controlling, by the electronic device, the second application to execute the target operation will be exemplarily described by taking the following features as an example: the target operation includes the first suboperation and the second suboperation, the first suboperation is an operation of the first application, the second suboperation is an operation of the second application, and the target interface is an interface of the first application.

Method 1: the electronic device obtains the second suboperation associated with the first suboperation based on the first suboperation, and then controls the second application to execute the second suboperation.

Method 2: the electronic device configures an instruction interface between the first application and the second application, so that the first application sends, to the second application, indication information used for indicating the second suboperation associated with the first suboperation through the instruction interface, and upon receipt of the indication information, the second application automatically executes the second suboperation.

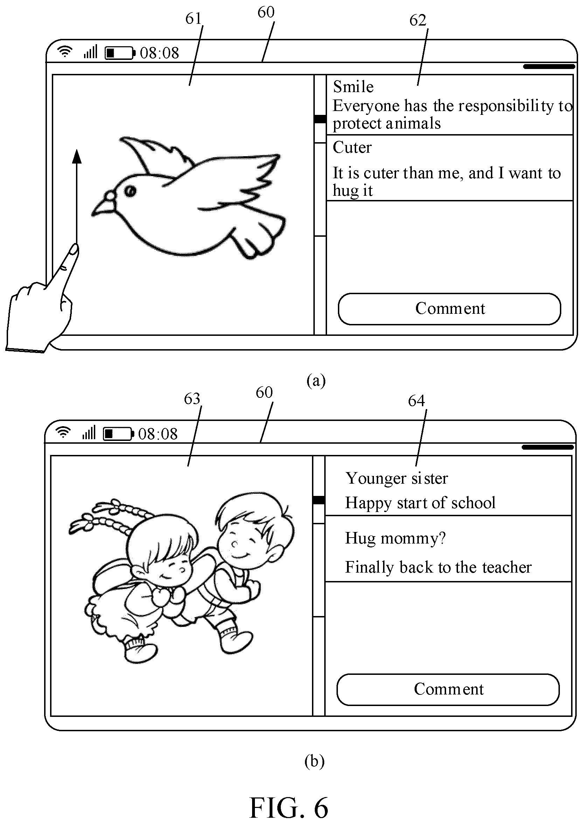

The application control method provided by the embodiments of the present invention will be exemplarily described below with reference to FIG. 6.

Exemplarily, it is assumed that the association level between the first application and the second application is level 2 (which is a level indicated by the adjustment control), level 2 corresponds to a search operation, that is, (a search operation, a search operation), and an operation of controlling to switch to the next, that is, (an operation of controlling to switch to the next, an operation of controlling to switch to the next), and both the first application and the second application are "video" applications, that is, the first application and the second application are a same application, as shown in (a) in FIG. 6, the electronic device displays the adjustment control on a folding screen 60 in a folded state, displays a playback interface 61 of a first video in a first display area of the folding screen 60, and displays a commenting interface 62 of the first video in a second display area of the folding screen 60, so that the user can slide upwards on the playback interface 61 (that is, the target interface) of the first video. That is, the electronic device receives the third input by the user for the target interface, and then as shown in (b) in FIG. 6, the electronic device controls "video" to switch the playback interface of the first video displayed in the first display area to a playback interface 63 of a second video in response to the upward sliding input, and controls "video" to switch the commenting interface of the first video displayed in the second display area to a commenting interface 64 of the second video, the second video being a next video of the first video. That is, the electronic device controls the first application and the second application to execute the target operation.

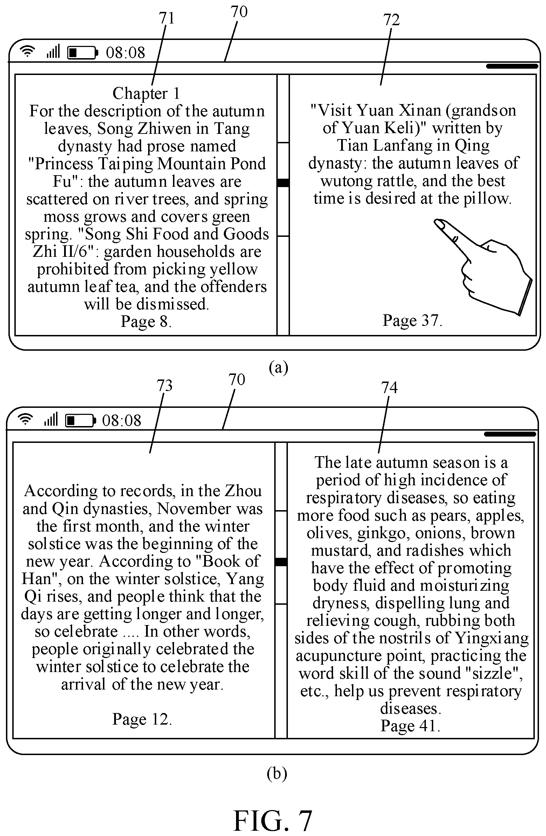

Moreover, exemplarily, it is assumed that the association level between the first application and the second application is level 2, level 2 corresponds to a finding operation, that is, (a finding operation, a finding operation), and an operation of controlling to switch to the next page, that is, (an operation of controlling to switch to the next page, an operation of controlling to switch to the next page), and both the first application and the second application are "reading" applications, as shown in (a) in FIG. 7, the electronic device displays the adjustment control on a folding screen 70 in a folded state, displays an interface 71 in a first display area of the folding screen 70, the interface 71 including the content of page 8 of a novel, and displays an interface 72 in a second display area of the folding screen 70, the interface 72 including the content of page 37 of the novel, so that the user can click on the right area (that is, the target interface) of the interface 72. That is, the electronic device receives the third input by the user for the target interface, and then as shown in (b) in FIG. 7, the electronic device controls "reading" to switch the interface 71 displayed in the first display area to an interface 73 in response to the third input, the interface 73 including the content of page 12 of the novel, and controls "reading" to switch the interface 72 displayed in the second display area to an interface 74, the interface 74 including the content of page 41 of the novel. That is, the electronic device controls the first application and the second application to execute the target operation.

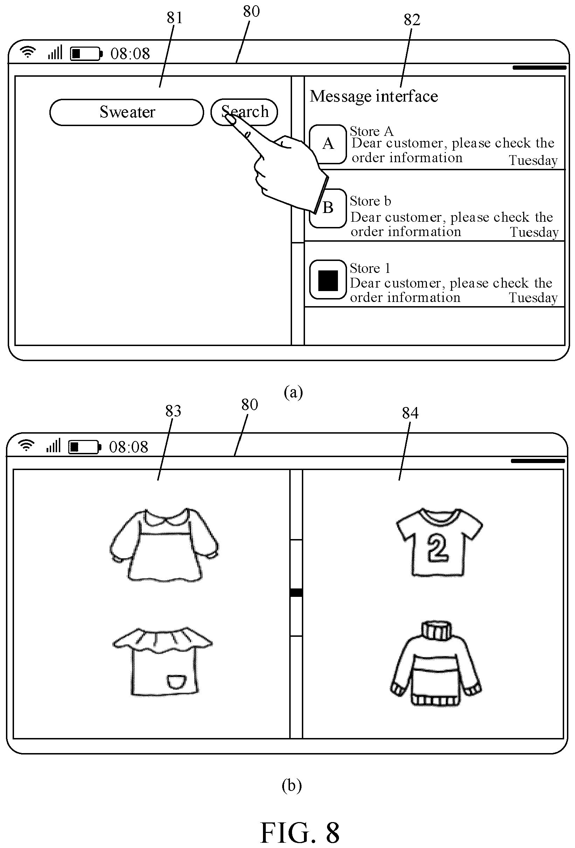

Moreover, exemplarily, it is assumed that the association level between the first application and the second application is level 1, level 1 corresponds to a search operation, that is, (a finding operation, a finding operation), and the first application is "shopping 1" and the second application is "shopping 2", as shown in (a) in FIG. 8, the electronic device displays the adjustment control on a folding screen 80 in a folded state, displays a main interface 81 of "shopping 1" in a first display area of the folding screen 80, and displays a logistics interface 82 of "shopping 2" in a second display area of the folding screen 80, so that the user can enter the keyword <sweater> in the main interface 81 (that is, the target interface), specifically, enter in a search box of the main interface 81. That is, the electronic device receives the third input by the user for the target interface, and then in one implementation, as shown in (b) in FIG. 8, the electronic device controls "shopping 1" to search <sweater> in the main interface and displays a searched result interface 83; and controls "shopping 2" to search <sweater> in the main interface of "shopping 2", and displays a searched result interface 84 in response to the third input. That is, the electronic device controls the first application and the second application to execute the target operation. In another implementation, the electronic device controls "shopping 1" to search <sweater> in the main interface and displays a searched result interface; and controls "shopping 2" to search <sweater> in the logistics interface of "shopping 2" (that is, a current interface of "shopping 2"), and displays a searched result interface (not shown in the drawings). In another implementation, the electronic device controls "shopping 1" to search <sweater> in the main interface and displays a searched result interface, and determines whether the current interface of "shopping 2" is a main interface of "shopping 2". The current interface of "shopping 2" is a logistics interface of "shopping 2". Therefore, the electronic device does not control "shopping 2" to execute any search operation. In this case, the electronic device keeps displaying the logistics interface in the second display area.

Optionally, in the embodiments of this application, if the user performs an input on the adjustment control, and triggers the electronic device to adjust the association level between "shopping 1" and "shopping 1" to level 2, an association operation between "shopping 1" and "shopping 1" is updated as an association operation corresponding to level 2. If the association operation corresponding to level 2 is a search operation, that is, (a finding operation, a finding operation) and an operation of switching to the previous page, that is, (an operation of switching to the previous page, an operation of switching to the previous page), in this case, if the user slides upwards on the result interface 83 shown in (b) in FIG. 8, the electronic device controls both "shopping 1" and "shopping 2" to execute an operation of paging up. For example, the electronic device can update displaying the contents displayed in the result interface 83 and the result interface 84. In this way, it is convenient for the user to perform shopping and price comparison.

In the embodiments of this application, compared with the manner in the traditional technology that the user can trigger the electronic device to control multiple applications to execute operations corresponding to the inputs only by respectively performing inputs on interfaces of the multiple applications simultaneously displayed by the electronic device, the application control method provided by the embodiments of the present invention can trigger the electronic device to control multiple applications to simultaneously execute operations corresponding to the input through one input. Therefore, the application control process is simplified, and the human-computer interaction performance is improved.

Optionally, in the embodiments of this application, when an interface (e.g. the first interface) of an application is displayed on one display screen of the electronic device, a multi-display bar is displayed on the display screen. The user pulls down the multi-display bar, and the electronic device displays a multi-display dock, so that the user can select applications that support and are using applications for multi-display (that is, split-screen display) in the multi-display dock. If the user selects an application that requires multi-display, the electronic device can execute a multi-display operation. The user can slide up and down on the multi-display dock to trigger the electronic device to display application icons of all applications that support multi-display.

Specifically, the first display area and the second display area are different display areas of one display screen (hereinafter referred to as the target display screen) of the electronic device, that is, in a case that the electronic device displays the first interface and the second interface on separate screens, in order to simplify the process of triggering the split screen of the electronic device, the electronic device can display the first interface and a control (e.g. a first control below) on the display screen, so that the user can perform an input (e.g. a fourth input below) on the control to trigger the electronic device to display at least one application icon, and the user can perform an input (e.g. the first input) on an application icon of an application corresponding to the second interface in the at least one application icon to trigger the electronic device to display the first interface and the second interface in different display areas of the display screen.

In the embodiments of this application, the applications indicated by the at least one application icon are all applications in the electronic device that support split-screen display.

Exemplarily, in the embodiments of this application, before S201, the application control method provided by the embodiments of the present invention further includes S207 to S209 below.

S207. The electronic device displays the first interface and the first control.

Optionally, in the embodiments of this application, the electronic device displays the first interface and the first control in the target display screen.

For example, the electronic device displays the first interface and the first control in different display areas of the target display screen. Surely, the electronic device can display the first control on the first interface, which is specifically determined according to actual use requirements, and is not limited in the embodiments of the present invention.

Optionally, in the embodiments of this application, whether the electronic device is a single-screen electronic device or a multi-screen electronic device, the target display screen is one display screen in the electronic device.

Optionally, in the embodiments of this application, when the electronic device is a folding screen electronic device, the target display screen is one display screen in an unfolded or folded state.

S208. The electronic device receives a fourth input by the user for the first control.

S209. In response to the fourth input, the electronic device displays at least one application icon.

The first input is an input by the user for an icon of the second application in the at least one at least one application icon. Please refer to the related descriptions in S201 above for the description of the second input. In order to avoid repetition, details are not described here again.

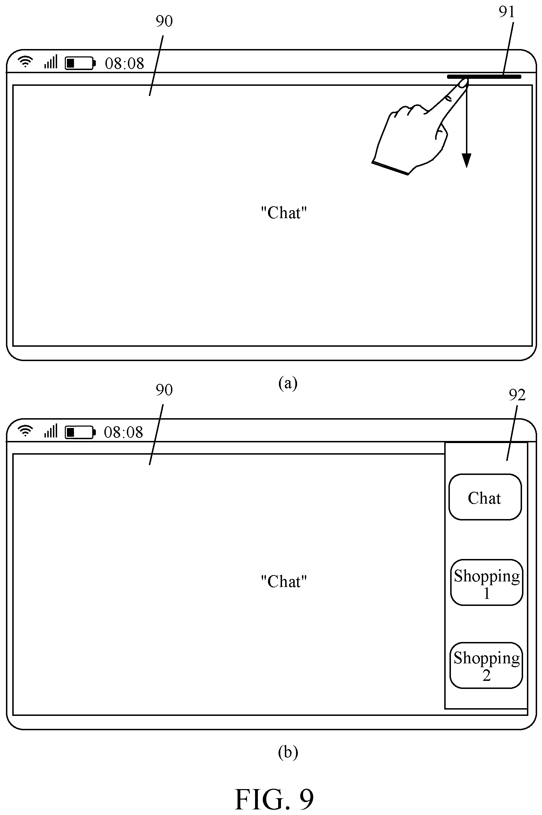

Optionally, in the embodiments of this application, the first control includes a folded state and an unfolded state. Before the user performs the fourth input, the first control is in the folded state, e.g. a control 91 shown in (a) in FIG. 9. After the user performs the fourth input, the first control is in the unfolded state, e.g. a control 92 shown in (b) in FIG. 9. As shown in (b) in FIG. 9, when being in the unfolded state, the first control includes at least one application icon. The at least one application icon includes an icon of "chat", an icon of "shopping 1", and an icon of "shopping 2". That is, the electronic device displays the at least one application icon in the first control in the unfolded state.

Optionally, in the embodiments of this application, optionally, in the embodiments of this application, the first control in the folded state is referred to as a multi-display bar, and the first control in the unfolded state is referred to as a multi-display dock.

Optionally, in the embodiments of this application, after executing S209, the electronic device can cancel displaying the first control, or switch the state of the first control from the unfolded state to the folded state. This is specifically determined according to actual use requirements, and is not limited in the embodiments of the present invention.

Optionally, in the embodiments of this application, the fourth input is any possible form of input such as a click input, a long press input, a re-press input, a sliding input (e.g. an input of sliding downwards relative to the display screen), and a drag input by the user for the first control, is specifically determined according to actual use requirements, and is not limited in the embodiments of the present invention. Please refer to the related descriptions of the first input in S201 above for the description of the input form of the fourth input. In order to avoid repetition, details are not described here again.

In the embodiments of this application, when displaying an interface of an application, the electronic device can display the first control used for triggering application icons of all applications that support split-screen display in the electronic device. Therefore, compared with the solution in the traditional technology that an input can be performed on a split frequency control only after switching to the recent taskbar or triggering to display a shortcut center interface, the application control method provided by the embodiments of the present invention can more conveniently and quickly realize split-screen display, so that the operation process of split-screen display is simplified, thereby improving the operation convenience.

It should be noted that, in the embodiments of this application, the application control method shown in the method drawings is exemplarily described in conjunction with a figure in the embodiments of this application. During specific implementation, the application control method shown in method drawings can also be implemented in conjunction with any other figure shown in the embodiments above. Details are not described here again.

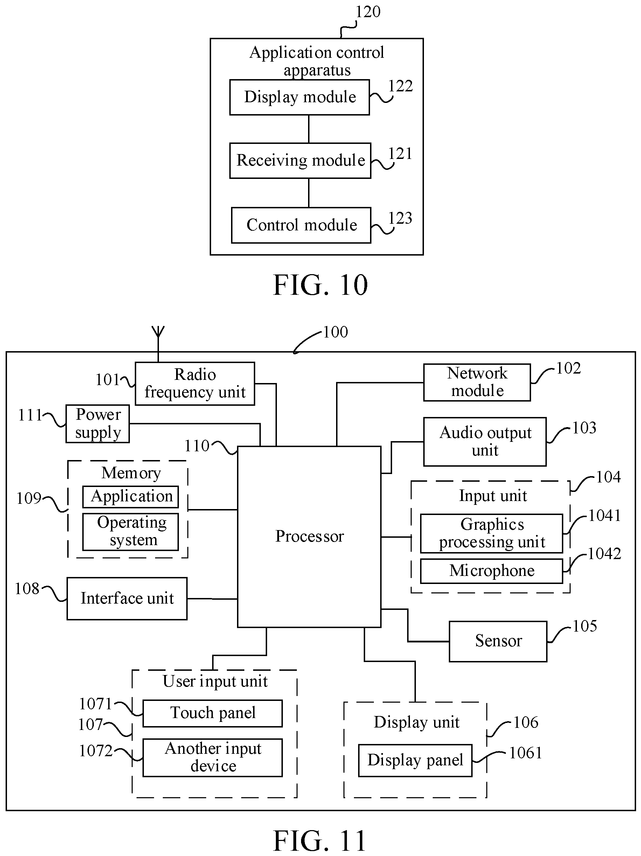

As shown in FIG. 10, embodiments of the present invention provide an application control apparatus 120. The apparatus 120 includes a receiving module 121, a display module 122, and a control module 123. The receiving module 121 is configured to receive a first input by a user in a case that the display module 122 displays a first interface, the first interface being an interface of a first application. The display module 122 is configured to display the first interface in a first display area, display an adjustment control, and display a second interface in a second display area in response to the first input received by the receiving module 121, the second interface being an interface of a second application. The receiving module 121 is further configured to receive a second input by the user for the adjustment control displayed by the display module 122. The control module 123 is configured to adjust an association level between the first application and the second application in response to the second input received by the receiving module 121, the association level being used for indicating any one of the following: the number of association operations between the first application and the second application, and the importance of the association operations between the first application and the second application.

Optionally, in the embodiments of this application, the adjustment control includes a sliding area and a slider provided in the sliding area. The receiving module 121 is specifically configured to receive a second input by the user for the slider. The control module 123 is specifically user configured to control the slider to slide in the sliding area in response to the second input, and adjust the association level between the first application and the second application according to a position of the slider in the sliding area.

Optionally, in the embodiments of this application, in a case that the association level is used for indicating the number of association operations between the first application and the second application, the larger a value of the association level, the greater the number of association operations between the first application and the second application indicated by the association level.

Optionally, in the embodiments of this application, the sliding area includes M subareas. The association level includes M levels, one subarea corresponds to one level, and M is an integer greater than 1. The control module 123 is specifically configured to adjust the association level from a first level to a second level in a case that the slider slides from a first subarea to a second subarea, where the first subarea and the second subarea are different subareas among the M subareas, the first level and the second level are different levels among the M levels, the first level is a level corresponding to the first subarea, and the second level is a level corresponding to the second subarea.

Optionally, in the embodiments of this application, the adjustment control includes M subcontrols, the association level includes M levels, one subcontrol corresponds to one level, and M is an integer greater than 1. The receiving module 121 is specifically configured to receive a second input by the user for a target subcontrol among the M subcontrols. The control module 123 is specifically configured to adjust the association level between the first application and the second application to a level corresponding to the target subcontrol in response to the second input.

Optionally, in the embodiments of this application, a target level in the association level corresponds to at least one operation, and the target level is a level before receiving the second input, or a level after receiving the second input. The receiving module 121 is further configured to receive a third input by the user for a target interface after the display module 122 displays a second interface in the second display area, where the third input is an input of triggering a target operation in the at least one operation, and the target interface is an interface of the first application or an interface of the second application. The control module 123 is further configured to control the first application and the second application to execute the target operation in response to the third input received by the receiving module 121.

Optionally, in the embodiments of this application, the first display area and the second display area are different display areas of one display screen. The display module 122 is further configured to display the first interface and a first control before the receiving module 121 receives the first input. The receiving module 121 is further configured to receive a fourth input by the user for the first control displayed by the display module 122. The display module 122 is further configured to display at least one application icon in response to the fourth input received by the receiving module 121, the first input being an input by the user for an icon of the second application in the at least one application icon.

The application apparatus 120 provided by the embodiments of the present invention can implement the processes implemented by the electronic device shown in the method embodiments. In order to avoid repetition, details are not described here again.

The embodiments of the present invention provide an application control apparatus. The apparatus control method can receive a first input in a case that a first interface is displayed, the first interface being an interface of a first application; display an adjustment control, display the first interface in a first display area, and display a second interface in a second display area in response to the first input, the second interface being an interface of a second application; receive a second input for the adjustment control; and adjust an association level between the first application and the second application in response to the second input. Through this solution, when the apparatus control method simultaneously displays the first interface and the second interface, that is, according to the association relation between the second application corresponding to the second interface and the first application corresponding to the first interface, the electronic device can display the adjustment control used for adjusting the association level between the first application and the second application. Therefore, a user can trigger the apparatus control method to flexibly adjust the association level between the first application and the second application according to actual use requirements, so that the apparatus control method can display the interface of the first application and the interface of the second application at different association levels, and thus the flexibility that the apparatus control method simultaneously displays interfaces of multiple applications can be improved.

Furthermore, the association level between the first application and the second application can indicate the degree of association between the first application and the second application, and the degree of association determines whether operations can be associated between the two applications, and the degree to which operations are associated. Therefore, based on the application control method provided by the embodiments of the present invention, the user can trigger the electronic device to adjust the association level between the first application and the second application to an association level that satisfies the requirements for the association operations between the first application and the second application, thereby improving the user experience.

FIG. 11 is a schematic structural diagram of hardware of an electronic device according to embodiments of the present invention. As shown in FIG. 11, the electronic device 100 includes, but is not limited to, components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art can understand that the electronic device structure shown in FIG. 11 does not form a limitation to the electronic device, and the electronic device may include more or less components than those shown in the drawing, or combines some components, or adopts different component arrangements. In the embodiments of this application, the electronic device includes, but is not limited to, a mobile phone, a tablet computer, a laptop computer, a palm computer, an on-board electronic device, a wearable device, a pedometer, etc.

The user input unit 107 is configured to receive a first input in a case that the display unit 106 displays a first interface, the first interface being an interface of a first application. The display unit 106 is configured to display an adjustment control, display the first interface in a first display area, and display a second interface in a second display area in response to the first input, the second interface being an interface of a second application. The user input unit 107 is further configured to receive a second input for the adjustment control displayed by the display unit 106. The control module is configured to adjust an association level between the first application and the second application in response to the second input received by the user input unit 107, the association level being used for indicating any one of the following: the number of association operations between the first application and the second application, and the importance of the association operations between the first application and the second application.

It can be understood that, in the embodiments of this application, the receiving module 121 in the schematic structural diagram (e.g. FIG. 10) of the electronic device can be implemented through the user input unit 107. The display module 122 in the schematic structural diagram (e.g. FIG. 10) of the electronic device can be implemented through the display unit 106. The control module 123 in the schematic structural diagram (e.g. FIG. 10) of the electronic device can be implemented through the processor 110.

The embodiments of the present invention provide an application control apparatus. The apparatus control method can receive a first input in a case that a first interface is displayed, the first interface being an interface of a first application; display an adjustment control, display the first interface in a first display area, and display a second interface in a second display area in response to the first input, the second interface being an interface of a second application, and the second application being an application having an association relation with the first application; receive a second input for the adjustment control; and adjust an association level between the first application and the second application in response to the second input, the association level being used for indicating any one of the following: the number of association operations between the first application and the second application, and the importance of the association operations between the first application and the second application. Through this solution, when the apparatus control method simultaneously displays the first interface and the second interface, that is, according to the association relation between the second application corresponding to the second interface and the first application corresponding to the first interface, the electronic device can display the adjustment control used for adjusting the association level between the first application and the second application. Therefore, a user can trigger the apparatus control method to flexibly adjust the association level between the first application and the second application according to actual use requirements, so that the apparatus control method can display the interface of the first application and the interface of the second application at different association levels, and thus the flexibility that the apparatus control method simultaneously displays interfaces of multiple applications can be improved.

Furthermore, the association level between the first application and the second application can indicate the degree of association between the first application and the second application, and the degree of association determines whether operations can be associated between the two applications, and the degree to which operations are associated. Therefore, based on the application control method provided by the embodiments of the present invention, the user can trigger the apparatus control method to adjust the association level between the first application and the second application to an association level that satisfies the requirements for the association operations between the first application and the second application, thereby improving the user experience.

It should be understood that, in the embodiments of this application, the radio frequency unit 101 is configured to receive and send signals in the information reception and transmission or call process, specifically, receive downlink data of a base station and then forward same to the processor 110 for processing, and send uplink data to the base station. In general, the radio frequency unit 101 includes, but is not limited to, an antenna, at least one amplifier, a transceiver, a coupler, a low-noise amplifier, a duplexer, etc. In addition, the radio frequency unit 101 can also communicate with a network and other devices through a wireless communication system.

The electronic device provides wireless broadband Internet access for the user through the network module 102, e.g. help the user to receive and send e-mails, browse webpages, access streaming media, etc.

The audio output unit 103 can convert, into an audio signal, audio data received by the radio frequency unit 101 or the network module 102, or stored in the memory 109, and output same as sound. Moreover, the audio output unit 103 can also provide an audio output (e.g. call signal receiving sound, message receiving sound, etc.) related to specific functions executed by the electronic device 100. The audio output unit 103 includes a loudspeaker, a buzzer, a receiver, etc.

The input unit 104 is configured to receive an audio or video signal. The input unit 104 may include a graphics processing unit (graphics processing unit, GPU) 1041 and a microphone 1042. The graphics processing unit 1041 processes image data of a static picture or a video obtained by an image capture apparatus (e.g. a camera) in a video capture mode or an image capture mode. A processed image frame can be displayed on the display unit 106. The image frame processed by the graphics processing unit 1041 can be stored in the memory 109 (or another storage medium) or transmitted via the radio frequency unit 101 or the network module 102. The microphone 1042 can receive sound and can process such sound into audio data. The processed audio data can be converted into audio data in a format that can be transmitted to a mobile communication base station via the radio frequency unit 101 in a telephone call mode for output.

The electronic device 100 also includes at least one sensor 105, e.g. a light sensor, a motion sensor, and other sensors. Specifically, the light sensor includes an ambient light sensor and a proximity sensor. The ambient light sensor can adjust a brightness of a display panel 1061 according to the intensity of the ambient light, and the proximity sensor can turn off the display panel 1061 and/or backlight as the electronic device 100 moves to the ear. As one of motion sensors, an accelerometer sensor can measure a magnitude of an acceleration in each direction (generally a triaxial direction), can measure the strength and direction of the gravity in a static state, and can be configured to identify the gestures of the electronic device (e.g. portrait and landscape orientation switching, related games, magnetometer gesture calibration), vibration identification related functions (e.g. a pedometer and knocking), etc. The sensor 105 may also include a fingerprint sensor, a pressure sensor, an iris sensor, a molecular sensor, a gyroscope, a barometer, a hygrometer, a thermometer, an infrared sensor, etc. Details are not described here again.

The display unit 106 is configured to display information input by or provided for the user. The display unit 106 may include the display panel 1061, and the display panel 1061 may be configured in the form of a liquid crystal display (liquid crystal display, LCD), an organic light-emitting diode (organic light-emitting diode, OLED), etc.

The user input unit 107 is configured to receive inputted numerical or character information, and generate key signal input associated with user settings and functional control of the electronic device. Specifically, the user input unit 107 includes a touch panel 1071 and another input device 1072. The touch panel 1071 is also referred to as a touch screen, and can collect touch operations of the user on or near the touch screen 1071 (e.g. operations of any suitable object or accessory such as a finger of the user or a stylus on the touch panel 1071 or near the touch panel 1071). The touch panel 1071 may include two parts: a touch detection apparatus and a touch controller. The touch detection apparatus detects a touch orientation of the user, detects a signal produced by the touch operation, and transmits the signal to the touch controller. The touch controller receives touch information from the touch detection apparatus, converts same into contact coordinates, and sends same to the processor 110, and can receive and execute a command sent by the processor 110. In addition, the touch panel 1071 can be achieved by various types of sound waves such as a resistive sound wave, a capacitive sound wave, an infrared sound wave, and a surface sound wave. In addition to the touch panel 1071, the user input unit 107 may also include another input device 1072. Specifically, the another input device 1072 may include, but is not limited to, a physical keyboard, function keys (such as a volume control key and an on/off key), a trackball, a mouse, an operating rod, etc.

Furthermore, the touch panel 1071 can cover the display panel 1061. Upon detecting a touch operation on or near the touch panel 1071, the touch panel 1071 transmits the touch operation to the processor 110 to determine the type of a touch event, and then the processor 110 provides corresponding visual output on the display panel 1061 according to the type of the touch event. Although in FIG. 11, the touch panel 1071 and the display panel 1061 serve as two independent components to achieve input and output functions of the electronic device, in some embodiments, the touch panel 1071 and the display panel 1061 can be integrated to achieve the input and output functions of the electronic device, which are not specifically limited here.

The interface unit 108 is an interface for connecting an external apparatus to the electronic device 100. For example, the external apparatus includes a wired or wireless headset port, an external power supply (or a battery charger) port, a wired or wireless data port, a memory card port, a port for connecting apparatuses having identification modules, an audio input/output (I/O) port, a video I/O port, a headphone port, etc. The interface unit 108 is configured to receive an input (e.g. data information, power, etc.) from the external apparatus and transmit the received input to one or more elements in the electronic device 100 or configured to transmit data between the electronic device 100 and the external apparatus.

The memory 109 is configured to store a software program and various data. The memory 109 may mainly include a program storage area and a data storage area, where the program storage area can store operating systems, an application required by at least one function (e.g. a sound playing function, an image playing function, etc.), etc., and the data storage area can store data (such as audio data and an address book) created according to the utilization of the mobile phone, etc. In addition, the memory 109 may include a high-speed random-access memory, and may also include a non-volatile memory, e.g. at least one disk storage device, a flash memory, or other volatile solid-state storage devices.

The processor 110 is a control center of the electronic device, is connected to each part of the entire electronic device by using various interfaces and circuits, and executes various functions and processes data of the electronic device by running or executing the software programs and/or modules stored in the memory 109 and invoking the data stored in the memory 109 so as to monitor the entire electronic device. The processor 110 may include one or more processing units. Optionally, the processor 110 is integrated with an application processor and a modem processor, where the application processor mainly processes an operating system, user interfaces, applications, etc., and the modem processor mainly processes wireless communication. It can be understood that the modem processor is not integrated into the processor 110, either.

The electronic device 100 may also include a power supply 111 (e.g. a battery) supplying power to each component. Optionally, the power supply 111 is logically connected to the processor 110 through a power management system, so as to achieve functions of charging and discharging management, power consumption management, etc. through the power management system.

In addition, the electronic device 100 includes some functional modules which are not shown. Details are not described here again.

Optionally, the embodiments of the present invention further provide an electronic device, including a processor 110, a memory 109, and a computer program stored on the memory 109 and runnable on the processor 110, as shown in FIG. 11. The computer program, where when executed by the processor 110, implements the processes in the method embodiments, which can achieve the same technical effect. In order to avoid repetition, details are not described here again.

The embodiments of the present invention further provide a computer readable storage medium, having a computer program stored thereon, where the computer program, when executed by the processor, implements the processes in the method embodiments, which can achieve the same technical effect. In order to avoid repetition, details are not described here again. The computer readable storage medium may include a read-only memory (read-only memory, ROM), a random access memory (random access memory, RAM), a floppy disk, an optical disk, etc.

It should be noted that the terms "include", "comprise" or any other variants thereof herein are intended to cover non-exclusive inclusion, so that a process, method, article or device that includes a series of elements includes not only those elements, but also other elements that are not explicitly listed or elements inherent to the process, method, article, or apparatus. If no more limitations are made, an element defined by a phrase "including one..." does not exclude that there are other relevant elements in the process, method, article, or apparatus including the elements.

By means of the description of the foregoing implementations, a person skilled in the art can clearly know that the method according to the foregoing embodiments can be implemented by software and a necessary general-purpose hardware platform, and can also be implemented by the hardware, but in many cases, the former is a better implementation. Based on such an understanding, the technical solutions of this application or a part thereof contributing to the prior art may be essentially embodied in the form of a software product. The computer software product is stored in one storage medium (such as a ROM/RAM, a floppy disk, or an optical disc) and includes several instructions so that one electronic device (which may be a mobile phone, a computer, a server, an air conditioner, a network device, and the like) implements the method according to the embodiments of this application.

The embodiments of this application are described above with reference to the accompanying drawings, but this application is not limited to the foregoing detailed description. The foregoing detailed description is only schematic but not restrictive. Under the motivation of this application, a person skilled in the art may make many forms without departing from the purpose of this application and the scopes of protection of the claims, and these all fall within the scope of protection of this application.

## Claims

1. An application control method, comprising:
receiving a first input in a case that a first interface is displayed, wherein the first interface is an interface of a first application;
displaying an adjustment control, displaying the first interface in a first display area, and displaying a second interface in a second display area in response to the first input, wherein the second interface is an interface of a second application;
receiving a second input for the adjustment control; and
adjusting an association level between the first application and the second application in response to the second input, wherein the association level is used for indicating any one of the following:
the number of association operations between the first application and the second application, and the importance of the association operations between the first application and the second application.

2. The method according to claim 1, wherein the adjustment control comprises a sliding area and a slider provided in the sliding area;
the receiving a second input for the adjustment control comprises:
receiving a second input for the slider; and
the adjusting an association level between the first application and the second application in response to the second input comprises:
controlling the slider to slide in the sliding area in response to the second input, and adjusting the association level according to a position of the slider in the sliding area.

3. The method according to claim 1, wherein in a case that the association level is used for indicating the number of association operations between the first application and the second application, the larger a value of the association level, the greater the number of association operations between the first application and the second application.

4. The method according to claim 1, wherein the adjustment control comprises M subcontrols, the association level comprises M levels, one subcontrol corresponds to one level, and M is an integer greater than 1;
the receiving a second input for the adjustment control comprises:
receiving a second input for a target subcontrol among the M subcontrols; and
the adjusting an association level between the first application and the second application in response to the second input comprises:
adjusting the association level to a level corresponding to the target subcontrol in response to the second input.

5. The method according to claim 1, wherein a target level in the association level corresponds to at least one operation, and the target level is a level before receiving the second input, or a level after receiving the second input; and
after the displaying a second interface in a second display area, the method further comprises:
receiving a third input for a target interface, wherein the third input is an input of triggering a target operation in the at least one operation; the target interface is an interface of the first application or an interface of the second application; and
controlling the first application and the second application to execute the target operation in response to the third input.

6. The method according to claim 1, wherein the first display area and the second display area are different display areas in a display screen; and
before the receiving a first input, the method further comprises:
displaying the first interface and a first control;
receiving a fourth input for the first control;
displaying at least one application icon in response to the fourth input,
wherein the first input is an input of an icon of the second application in the at least one application icon.

7. An application control apparatus, comprising a receiving module, a display module, and a control module, wherein
the receiving module is configured to receive a first input in a case that the display module displays a first interface, wherein the first interface is an interface of a first application;
the display module is configured to display an adjustment control, display the first interface in a first display area, and display a second interface in a second display area in response to the first input received by the receiving module, wherein the second interface is an interface of a second application, and the second application is an application having an association relation with the first application;
the receiving module is further configured to receive a second input for the adjustment control displayed by the display module; and
the control module is configured to adjust an association level between the first application and the second application in response to the second input received by the receiving module, wherein the association level is used for indicating any one of the following:
the number of association operations between the first application and the second application, and the importance of the association operations between the first application and the second application.

8. The apparatus according to claim 7, wherein the adjustment control comprises a sliding area and a slider provided in the sliding area;
the receiving module is specifically configured to receive a second input for the slider; and
the control module is specifically configured to control the slider to slide in the sliding area in response to the second input, and adjust the association level according to a position of the slider in the sliding area.

9. The apparatus according to claim 7, wherein in a case that the association level is used for indicating the number of association operations between the first application and the second application, the larger a value of the association level, the greater the number of association operations between the first application and the second application.

10. The apparatus according to claim 7, wherein the adjustment control comprises M subcontrols, the association level comprises M levels, one subcontrol corresponds to one level, and M is an integer greater than 1;
the receiving module is specifically configured to receive a second input for a target subcontrol among the M subcontrols; and
the control module is specifically configured to adjust the association level to a level corresponding to the target subcontrol in response to the second input.

11. The apparatus according to claim 7, wherein a target level in the association level corresponds to at least one operation, and the target level is a level before receiving the second input, or a level after receiving the second input;
the receiving module is further configured to receive a third input for a target interface after the display module displays a second interface in the second display area, wherein the third input is an input of triggering a target operation in the at least one operation, and the target interface is an interface of the first application or an interface of the second application; and
the control module is further configured to control the first application and the second application to execute the target operation in response to the third input received by the receiving module.

12. The apparatus according to claim 7, wherein the first display area and the second display area are different display areas in a display screen;
the display module is further configured to display the first interface and a first control before the receiving module receives the first input;
the receiving module is further configured to receive a fourth input for the first control displayed by the display module; and
the display module is further configured to display at least one application icon in response to the fourth input received by the receiving module,
wherein the first input is an input of an icon of the second application in the at least one application icon.

13. An electronic device, comprising a processor, a memory, and a computer program stored on the memory and runnable on the processor, wherein the computer program, when executed by the processor, implements the steps of the application control method according to any one of claims 1 to 6.

14. A computer readable storage medium, having a computer program stored thereon, wherein the computer program, when executed by a processor, implements the steps of the application control method according to any one of claims 1 to 6.

15. A computer program product, wherein the program product, when executed by at least one processor, implements the application control method according to any one of claims 1 to 6.

16. A photographing control device, wherein the device is configured to implement the application control method according to any one of claims 1 to 6.
